# EUROPEAN PATENT APPLICATION

(11) **EP 3 670 062 A1**
(43) Date of publication of application: **24.06.2020**
(21) Application number: 18306767.7
(22) Date of filing: 20.12.2018
(51) Int. Cl.: B23K 26/0622, B32B 43/00

(54) **METHOD FOR CUTTING AN INK STICKER IN A MULTILAYER STRUCTURE AND METHOD FOR PRINTING THE INK STICKER ONTO A SUBSTRATE**

(71) Applicant: Thales Dis France SA, 92190 Meudon (FR)
(72) Inventor: LESUR, Jean-Luc, 92190 MEUDON (FR); GRIGORESCU, Sorin, 92190 MEUDON (FR)
(74) Representative: Lotaut, Yacine Diaw

(57) **Abstract**

The invention concerns a method for cutting an ink sticker (230) situated in a multilayer structure (10) comprising an ink layer (12) between a protective layer (11) and an ink carrier layer (13). The process consists in:
- positioning (100) the multilayer structure (10) to be cut in front of a femtosecond laser device (200) with the protective layer facing said femtosecond laser device; and
- kiss cutting (110) the ink layer (12) through the protective layer (11) with a laser beam (210) emitted by the femtosecond laser device (200) in order to produce an ink sticker (230) between the protective layer and the uncut ink carrier layer, with the possibility to cut, partially cut or leave intact the protective layer (11).

## Description

### FIELD OF THE INVENTION

The invention relates to a method for cutting a thin ink sticker situated in a multilayer structure while keeping the properties of the sticker. The invention relates also to a method for printing the ink sticker thus obtained onto a substrate.

The invention finds applications in several fields where a sticker has to be cut and, in particular, in the security field for securing documents like identity cards, passports or any documents containing identity-related visual elements.

### BACKGROUND

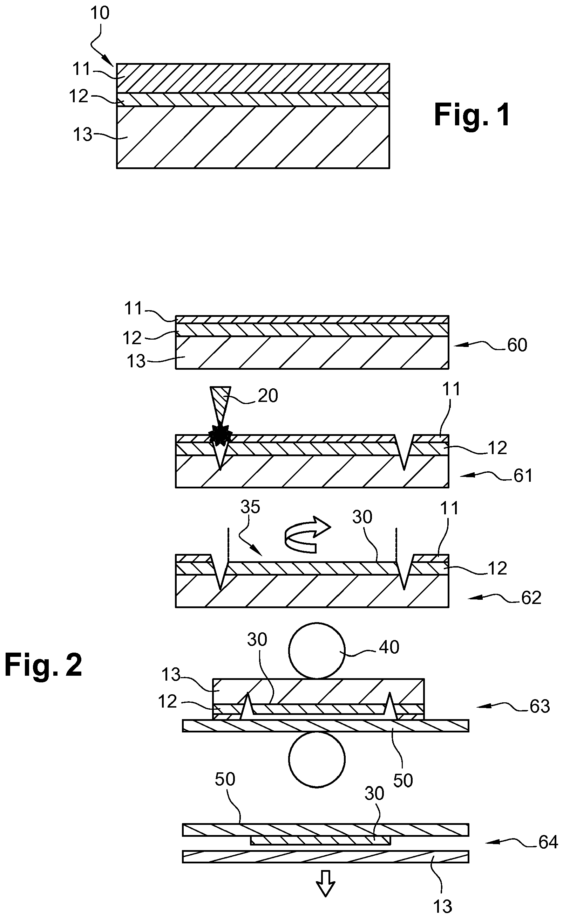

In the stickers cutting field there are multiple ways to manufacture stickers by cutting a multilayer structure formed from an ink ribbon inserted between an ink carrier layer and a protective layer, as represented for example in Fig.1. The ink carrier layer 13 consists of a material adapted to support the ink ribbon12. This material has mechanical characteristics adapted to the process and is heat-resistant, such as for example the PolyEthylene Terephtalate (PET) material. The protective layer 11 consists of a material adapted to protect the ink ribbon 12 from dust, scratches or environmental exposure. This material is generally transparent to light and heat-sensitive, such as for example the Polyethylene (PE) material.

In a known manner, the multilayer structure is mechanically cut with a classical cutting tool which kiss-cuts both the ink ribbon 12 and the protective layer 11. Such cutting can produce wastes and residues, at least on the edges of the cut ink sticker, leading to uncontrollable adhesion of the sticker to the substrate on which the sticker should be printed. This mechanical cut method can further generate the exposure to air, humidity or dust of the edges of the cut ink sticker. For most of the cases, a significant amount of time - sometimes several weeks - may pass between the sticker cut and the sticker printing wherein the sticker is at the contact with wastes, dusts, air or humidity, which has the effect of gradually reducing the adhesion properties of the sticker.

An example of such a known transfer method is represented on Fig.2. It consists in using a bladed tool 20 for cutting through a large thickness of the multilayer structure and, in particular, through the protective layer 11, the ink ribbon 12, as well as a minimal portion of the ink carrier layer 13. This method comprises a first operation 60 of positioning the bladed tool 20 in front of the multilayer structure 10. In an operation 61, this bladed tool 20 cuts at least the protective layer 11 and the ink ribbon 12. A minor portion of the ink carrier layer 13 can be sometimes also cut in order to facilitate later transfer. Several stickers with their protective layer portion could be successively cut, all the stickers having an identical geometrical shape for mechanical reasons.

The method of Fig.2 comprises later implemented operations 62, 63 for printing the sticker 30 onto a substrate 50. These printing operations comprise:
▪ an operation 62 of peeling off the portion of the protective layer 11 recovering the sticker, providing a window 35 with the exposed sticker 30;
▪ an operation 63 for placing the ink carrier layer 13 with the sticker 30 in front of the substrate 50, said sticker 30 facing said substrate 50, and for transferring the sticker 30 onto the substrate 50; and
▪ an operation 64 for removing the ink carrier layer 13 from the printed substrate 50.

As stated above, this mechanical cut method has the disadvantages of generating wastes and dusts at the cut time and causing entrance of air on the side of the cut portion of the ink sticker. The sticker is thus exposed not only to dust and waste depositions, but also to the air or environmental agents, which can gradually reduce the adhesion properties of said sticker. The mechanical cut has the further disadvantage of limiting the possible shapes of the sticker since the cut with a bladed tool is prone to geometrical limitations and is preferably straight.

### SUMMARY OF THE INVENTION

In response to the above formulated problems of dust and residues deposition and exposure to air of the known technology, the applicant is proposing a method for cutting at least one ink sticker in a multilayer structure wherein the cut ink layer is preserved from air exposure and dusts deposition. For that, the applicant proposes to use a specific laser beam cutting the ink layer with/without cutting the protective layer and leaving uncut the ink carrier layer.

According to a first aspect, the invention concerns a method for cutting an ink sticker in a multilayer structure comprising an ink layer between a protective layer and an ink carrier layer, comprising the following steps of:
- positioning the multilayer structure to be cut in front of a femtosecond pulsed laser device with the protective layer facing said femtosecond pulsed laser device; and
- kiss cutting the ink layer through the protective layer by laser irradiation generated by the femtosecond pulsed laser device in order to produce an ink sticker between the protective layer and the uncut ink carrier layer.

Such a method allows, among other advantages, to produce an ink sticker which is preserved from any dust and air until its printing onto a substrate.

In the following description, the expressions "ink layer" and "ink ribbon" will be used indifferently.

In the method of the invention, the protective layer can be cut, partly cut or uncut. The nature (level) of the cut of the protective layer can be defined by the adjustment of laser parameters such as energy/pulse, beam diameter, pulse repetition rate and scan speed.

Advantageously, the femtosecond (fs) pulsed laser device is configured to adapt parameters of the laser beam to predetermined characteristics of a cutting line. For example, the depth, width and form of the cutting line may vary, allowing any kind of ink sticker shape.

According to one or more embodiments, the femtosecond pulsed laser device produces femtosecond pulses in the green region of the wavelength spectrum, at pulse repetition rates up to 200 kHz, with scan speeds around 200 mm/s.

According to one or more embodiments, the ink of the ink layer is an acrylic ink.

According to one or more embodiments, at least two ink stickers are cut in the multilayer structure, the mentioned ink stickers having the possibility to have different shapes one from the other.

According to a second aspect, the invention concerns a method for printing an ink sticker onto a substrate, comprising the following operations of:
- cutting the ink sticker according to the above-defined method;
- peeling off the uncut protective layer;
- transferring the ink sticker from the ink carrier layer to the substrate; and
- peeling off the ink carrier layer.

Advantageously, the transferring operation comprises placing the ink carrier layer so that the ink sticker faces the substrate.

According to one or more embodiments, the transferring operation comprises a thermal-driven transfer process performed with heated soft rollers.

According to one or more embodiments, the method comprises an operation of adding a protection sheet on the transferred ink sticker as a protection of said ink sticker.

According to one or more embodiments, the method comprises a later operation of collating the ink sticker printed substrate with different other printed sheets.

### BRIEF DESCRIPTION OF THE DRAWINGS

A detailed description of some preferred embodiments is set forth herein below with reference to the following drawings, in which:
FIG. 1, already disclosed, is a schematic view of a multilayer structure;
FIG. 2, already disclosed, is a schematic view of a cutting method according to the prior art;
FIGS. 3A - 3B are cross-sectional schematic views of an ink sticker laser-cut in a multilayer structure according to the invention;
FIG. 4, is a schematic view of the cutting method according to the invention;
FIG. 5 is a schematic example of a femtosecond laser device cutting an ink sticker according to the method of the invention;
FIG 6 is an example of a multilayer structure containing several ink stickers cut with the method of the invention.

### DETAILED DESCRIPTION

This description provides examples not intended to limit the scope of the appended claims. The figures generally indicate the features of the examples, where it is understood and appreciated that like reference numerals are used to refer to like elements. Reference in the specification to "one embodiment" or "an embodiment" or "an example" means that a particular feature, structure, or characteristic described is included in at least one embodiment described herein and does not imply that the feature, structure, or characteristic is present in all embodiments described herein.

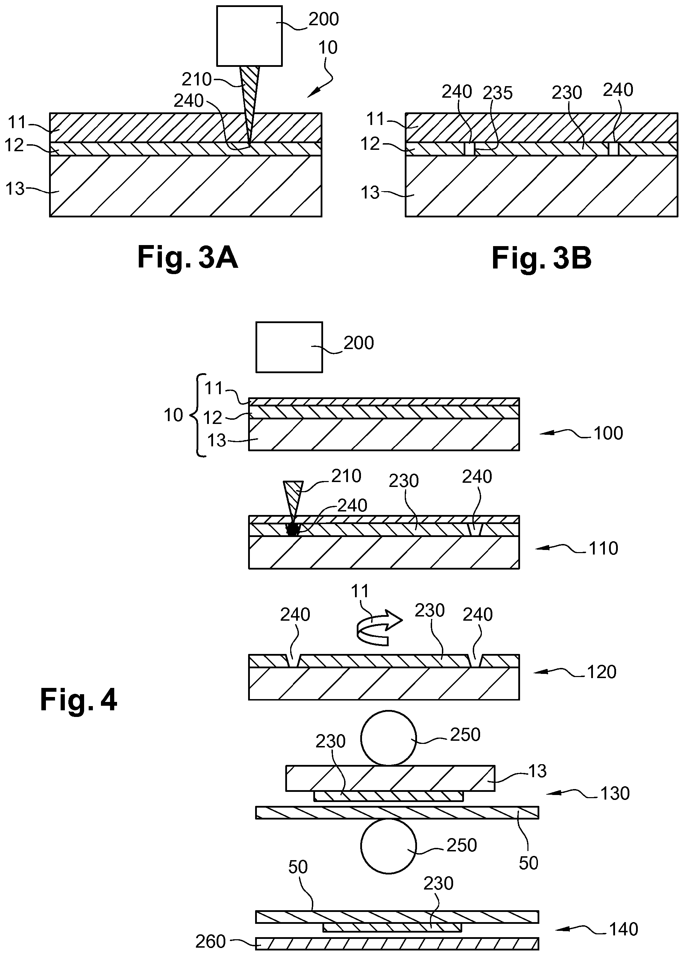

The invention is proposing a method wherein the ink sticker is cut with a specific laser device through the protective layer of the multilayer-structure. A schematic example of a multilayer structure 10 cut with a laser device accordingly to the invention is represented on Figs. 3A and 3B. In particular, Fig.3A represents a multilayer structure 10 and a laser device 200 with a laser beam 210 cutting the ink ribbon 12 through the protective layer 11.

The multilayer structure 10 is a classical multilayer construction, similar to that one of the prior art. It comprises an ink ribbon 12 supported by an ink carrier layer 13 and protected by a protective layer 11. The protective layer 11 is a transparent or quasi transparent material layer such as polyethylene (PE). The ink carrier layer 13 is a layer consisting of a material of any optical nature layer such as polyethylene terephthalate (PET). The ink ribbon 12 comprises a thin layer of an acrylic ink laid on the ink carrier layer 13. The thicknesses of the protective layer 11 and the ink ribbon 12 can be in the range of tens of microns, while the thickness of the ink carrier layer 13 can be of any value, sufficient for fulfilling its mechanical support function.

The ink ribbon 12 can be a single layer of an homogeneous grey ink consisting for example of a cluster of yellow, magenta and cyan pigments. As an alternative, the ink ribbon 12 can be a multi-layer consisting, for example, of superposed cyan, magenta and yellow layers or of a color ink and a glue layer or any other layer optimizing the adhesion of the sticker on the ink carrier layer 13 or the sticker on a top layer after cutting.

The laser device 200 is a pulsed femtosecond laser device - also called pulsed laser device or femtosecond laser device or fs laser device or femto laser device - operating in femtosecond regime and able to emit a focused laser beam 210 (called fs laser beam) towards the multilayer structure 10. The protective layer 11 of the multilayer structure 10 being transparent at the used laser wavelength, or substantially transparent, the fs laser beam 210 passes through the protective layer 11. The ink carrier layer 13 can have any optical characteristics; preferably it is transparent, or substantially transparent at the used laser wavelength, so that the fs laser beam 210 does not cut said ink carrier layer 13. In contrast, the ink ribbon 12 is a laser reactive layer; thus, the fs laser 210 cuts the ink ribbon 12. Thereby, the ink ribbon 12 is always cut by the fs laser beam 210, the protective layer 11 can be cut or not by the fs laser beam according to the used laser parameters, while the ink carrier layer 13 always remains uncut.

It is to be noted, that the kiss cut of the ink ribbon 12 can be obtained through any plastic material which is transparent to the used laser wavelength. Therefore, the kiss cut could be obtained through the protective layer 11, as disclosed herein, or through the carrier layer 13 or through both protective and carrier layers.

Fig.3B represents the multilayer structure 13 after the ink ribbon 12 has been cut by the fs laser 200 of Fig.3A. Thus, Fig.3B shows the sticker 230 between the protective layer 11 and the ink carrier layer 13. The sticker 230 is delimited by a surrounding cutting line 240. Depth and width - among other characteristics - of the cutting line 240 are predefined and controlled via laser device parameters. In particular, the depth/width of the cutting line 240 is determined by the laser spot diameter of the fs laser and a wider cutting line can be generated by cutting multiple parallel lines on the multilayer structure 10. Having an enlarged cutting line prevents overlapping of the ink during the sticker transfer in particular at high temperature and pressure regimes.

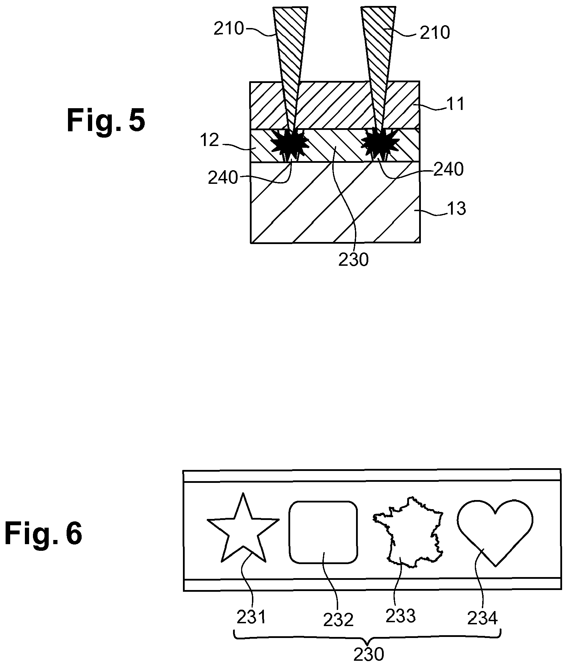

Since the cutting is laser made, the cutting line 240 can have any shape, for example, straight, curved or irregular lines, to form a sticker 230 of any desired shape. The sticker 230 could be of:
- geometrical shape with curved and/or straight lines - like patterns 231, 232 represented on Fig.6, or
- non-geometrical or irregular shape with free lines - like patterns 233, 234 represented on Fig.6.

As represented on Fig.6, several stickers 230 of any shape (different and/or identical shape) can be cut one next to the other, like for example stickers 231-234, in a same ink ribbon 12.

An example method for printing a laser cut sticker according to the invention is represented on Fig.4. This method comprises operations 100, 110 for cutting a sticker 230 inside a multilayer structure 10. The cutting process comprises, first, a positioning operation 100 consisting in positioning the multilayer structure 10 in front of the fs laser device 200, into a position such that the protective layer 11 of the multilayer structure 10 faced said fs laser device. The cutting process further comprises a cutting operation 110, wherein the fs laser beam 210 kiss cuts the ink ribbon 12 through the protective layer 11. In the example of Figs.3A et 4, the fs laser device 200 is shown irradiating the ink ribbon 12 with the fs laser beam 210. By multi-pulse irradiation and scan of the surface of the multi-layer structure 10, one can generate a cutting line 240 inside the multilayer structure10. It is to be understood that multiple fs laser pulses could be emitting simultaneously by one or several femto laser device(s), generating thus several cutting lines, as shown in Fig.5.

The fs laser device 200 is defined and controlled in order that the fs laser beam 210 cuts the ink ribbon 12 in all its thickness while leaving intact - i.e. uncut - the protective layer 11 and the ink carrier layer 13. In other words, the parameters of the fs laser device are chosen depending on the ablation thresholds of the ink ribbon and the protective layer, the ablation threshold of the ink ribbon being less than the ablation threshold of the protective layer. In the method of the invention, the parameters may be, for example, the wavelength, the working distance, the spot size, the number of passes at a line and the scan speed of the fs laser beam.

According to one or more embodiments, the fs laser device 200 scans the surface of the multi-layer structure 10 at a speed of about 200mm/s, at a wavelength comprised between 500nm and 1100 nm, with a focal distance of the beam conditioning lens comprised between about 100 and 500 mm. In an example, the fs laser device 200 is emitting at 515nm and is equipped with a scanning lens of 100 mm focal distance. The scan speed is set to 200 mm/s. This configuration allows for example, to cut an ink ribbon 12 of 20µm supported by an ink carrier layer 13 of 30 µm, through a protective layer 11 of 20µm, as shown in Fig.5.

As an alternative, when only the ink ribbon 12 is cut, this cut can be made through the protective layer 11 or through the ink carrier layer 13.

Such a laser cutting allows generating no dust or waste. Moreover, the thus cut sticker 230 is safe from the air not only at its surface but also at its sides since the complete sticker 230 is protected by the protective layer 11 even after cutting. Such a way, the sticker 230 can be conserved as long as necessary before operating the transfer without reducing of its adhesion properties.

In one or more embodiments, several stickers 230 are successively cut in a same ink ribbon 12, all the stickers being safe from the air exposure by the same protective layer 11.

The printing method of the invention, represented on Fig.4, further comprises operations 120, 130, 140 which can be implemented later, i.e. few hours or few days, weeks or years later, after the sticker 230 has been cut. In particular, these later operations 120, 130, 140 comprise:
▪ an operation 120 of peeling off the protective layer 11, releasing the sticker 230 so that the sticker is left without protection in order to be transferred on the substrate 50;
▪ a transferring operation 130 wherein the original sticker 230 is transferred from the ink carrier layer 30 to the substrate 50.

The transferring operation 130 comprises a moving operation for placing the ink carrier layer 13 with the sticker 230 in front of the substrate 50 in such a way that the sticker faces the substrate 50. The sticker transfer from the ink carrier layer 13 to the substrate 50 is obtained similar to a known process such as the Dye Diffusion Thermal Transfer (called D2T2). This D2T2 process uses heated soft rollers 250, one rolling on the ink carrier layer 13 and the other rolling on the substrate 50 so that the sticker 230, sandwiched between said ink carrier layer and said substrate, is heated at a predetermined temperature - for example at 85°C - for passing from the ink carrier layer to the substrate. Such a D2T2 process could be used for example with a substrate of about 50 to 100 µm. One would understand that other transferring processes can be used according, for example, to the type and thickness of the substrate and/or the ink carrier layer and/or the ink ribbon.

When the sticker 230 has been transferred to the substrate 50, the ink carrier layer 13 is peeled off. The substrate 50 is thus printed with the sticker 230. A protection sheet 260 can be added on the transferred sticker in order to protect the printed substrate 50. Alternatively or jointly, the printed substrate can be collated with a printed sheet 270, like a coversheet, for example, when the printed substrate is planned to be inserted inside a security document such as a passport or ID card.

While only some selected embodiments have been chosen to illustrate the present invention, it will be apparent to the skilled person from this disclosure that various changes and modifications can be made herein without departing from the scope of the invention as defined in the appended claims. The structures and functions of one embodiment can be adopted in another embodiment. Further, it is not necessary for all advantages to be present in particular embodiments at the same time.

## Claims

1. Method for cutting an ink sticker (230) in a multilayer structure (10) comprising an ink layer (12) between a protective layer (11) and an ink carrier layer (13), comprising the following steps of:
- positioning (100) the multilayer structure (10) to be cut in front of a femtosecond pulsed laser device (200) with the protective layer facing said femtosecond pulsed laser device; and
- kiss cutting (110) the ink layer (12) through the protective layer (11) by laser irradiation generated by the femtosecond pulsed laser device (200) in order to produce an ink sticker (230) between the protective layer and the uncut ink carrier layer.

2. Method according to claim 1, **characterized in that** the femtosecond pulsed laser device (200) is configured to adapt parameters of the laser irradiation to predetermined characteristics of a cutting line (240).

3. Method according to claim 1 or 2, **characterized in that** the femtosecond pulsed laser device (200) is configured to adjust laser parameters for cutting, partly cutting or uncutting the protective layer (11).

4. Method according to any one of claims 1 to 3, **characterized in that** the femtosecond pulsed laser device comprises a laser source operating in femtosecond regime, at pre-defined scanning speeds having values between 100 and 5000 mm/s.

5. Method according to any one of claims 1 to 4, **characterized in that** the ink of the ink layer (12) is an acrylic ink.

6. Method according to any one of claims 1 to 5, **characterized in that** at least two ink stickers (231-234) are cut in the multilayer structure (10), both ink stickers having different shapes one from the other.

7. Method for printing an ink sticker onto a substrate, comprising the following operations of:
- cutting the ink sticker according to the method of any one of claims 1 to 6;
- peeling off (120) the uncut protective layer (11);
- transferring (130) the ink sticker (230) from the ink carrier layer to a substrate (50); and
- peeling off the ink carrier layer.

8. Method according to claim 7, **characterized in that** the transferring operation (130) comprises placing the ink carrier layer (13) so that the ink sticker (230) faces the substrate (50).

9. Method according to claim 7 or 8, **characterized in that** the transferring operation (130) comprises a thermal transfer with heated soft rollers (250).

10. Method according to any one of claim 7 to 9, **characterized in that** it comprises an operation of adding a protection sheet (260) on the transferred ink sticker as a protection of said ink sticker.

11. Method according to any one of claim 7 to 10, **characterized in that** it comprises an operation of collating the ink sticker printed substrate with a printed sheet (270).
